# FASCICULE DE BREVET EUROPEEN

(11) **EP 2 185 384 B1**
(45) Date de publication et mention de la délivrance du brevet: **31.10.2012**
(21) Numéro de dépôt: 08836278.5
(22) Date de dépôt: 03.09.2008
(51) Int. Cl.: B60R 19/12

(54) **PARE-CHOCS POUR VEHICULE AUTOMOBILE**
PUFFER FÜR AUTOMOBILE
BUMPERS FOR AUTOMOBILE

(30) Priorité: 11.09.2007 FR 0757491
(43) Date de publication de la demande: 19.05.2010
(73) Titulaire: Peugeot Citroën Automobiles SA, 78140 Vélizy-Villacoublay (FR)
(72) Inventeur: BENANE, Saïd, F-94550 Chevilly Larue (FR); MASSIF, Kévin, F-78280 Guyancourt (FR)
(86) Numéro de dépôt international: PCT/FR2008/051563
(87) Numéro de publication internationale: WO 2009/044035

(56) Documents cités:
- EP-A- 1 065 108
- EP-A- 1 108 622
- DE-A1- 10 100 875
- DE-A1-102005 018 348
- US-B1- 6 513 843
- US-B1- 6 634 702

## Description

La présente invention concerne un véhicule automobile, du type comportant un châssis comprenant deux longerons, et un pare-chocs porté par le châssis, le pare-chocs comportant une poutre supérieure reliée à l'extrémité avant de chaque longeron par un absorbeur de chocs, et une poutre inférieure adaptée pour venir en contact avec un tibia d'un piéton.

Les véhicules automobiles sont actuellement équipés d'un pare-chocs comprenant une poutre supérieure et une poutre inférieure. Cette dernière est généralement appelée appui bas piéton.

La poutre supérieure forme une partie saillante située à environ 50 cm du sol. Elle est notamment propre à coïncider avec la poutre supérieure du pare-chocs d'un autre véhicule en cas de collision.

La poutre supérieure est fixée à des absorbeurs de chocs montés chacun sur une platine de réparabilité fixée à l'extrémité de chaque longeron du véhicule.

La poutre inférieure est propre à venir en contact avec le tibia d'un piéton en cas de choc piéton. Elle permet de réduire la gravité des lésions au niveau du genou résultant de la pression de la poutre supérieure sur le genou.

Après un choc, l'ensemble poutre supérieure et ses absorbeurs et/ou la poutre inférieure peuvent être facilement remplacés.

Le document EP 1 108 622 A2 décrit un véhicule automobile, du type comportant un châssis comprenant deux longerons, et un pare-chocs porté par le châssis. Le pare-chocs comporte une poutre supérieure reliée à l'extrémité avant de chaque longeron, et une poutre inférieure adaptée pour venir en contact avec un tibia d'un piéton. Chaque partie d'extrémité de la poutre inférieure est fixée à l'extrémité d'un ensemble de support déformable, chaque ensemble de support comprenant une pièce de liaison reliée à la poutre inférieure.

L'invention a pour but de proposer une solution particulièrement légère assurant de façon satisfaisante les fonctions de protection aux chocs frontaux à grande vitesse, de réparabilité et de protection des piétons.

Cet objet obtenu selon l'invention à l'aide d'un véhicule automobile selon la revendication 1.

A cet effet, l'invention a pour objet un véhicule automobile du type mentionné ci-dessus, dans laquel chaque partie d'extrémité de la poutre inférieure est fixée à l'extrémité d'un ensemble de support déformable, chaque ensemble de support comprenant une pièce de liaison reliée à la poutre inférieure, et une platine fixée à la pièce de liaison et solidaire de l'extrémité d'un longeron associé de telle sorte que la platine est disposée entre le longeron et l'absorbeur de chocs.

Suivant des modes particuliers de réalisation, le véhicule automobile comporte l'une ou plusieurs des caractéristiques suivantes :
- chaque pièce de liaison est rigide tandis que chaque platine comporte, en dessous du longeron, une portion de fixation de la pièce de liaison adaptée pour fléchir vers l'arrière sous l'effet d'un choc ;
- lors d'un choc, ladite portion de fixation de la platine est propre à fléchir autour d'un axe sensiblement perpendiculaire à l'axe longitudinal des longerons, et la pièce de liaison est propre à pivoter autour de cet axe ;
- chaque pièce de liaison présente une section en forme de U, et en ce que les branches du U adjacentes au longeron présentent une hauteur supérieure aux branches du U adjacentes à la poutre inférieure ;
- chaque pièce de liaison présente une forme générale arquée bombée vers l'avant, ladite pièce de liaison étant recourbée en sens inverse à son extrémité inférieure ; et
- ladite portion de fixation de la platine s'étend dans un plan perpendiculaire à l'axe longitudinal des longerons.

L'invention sera mieux comprise à la lecture de la description qui va suivre, donnée uniquement à titre d'exemple et faite en se référant aux dessins annexés, sur lesquels :
- la figure 1 est une vue en perspective de l'avant de la structure d'un véhicule automobile selon l'invention ;

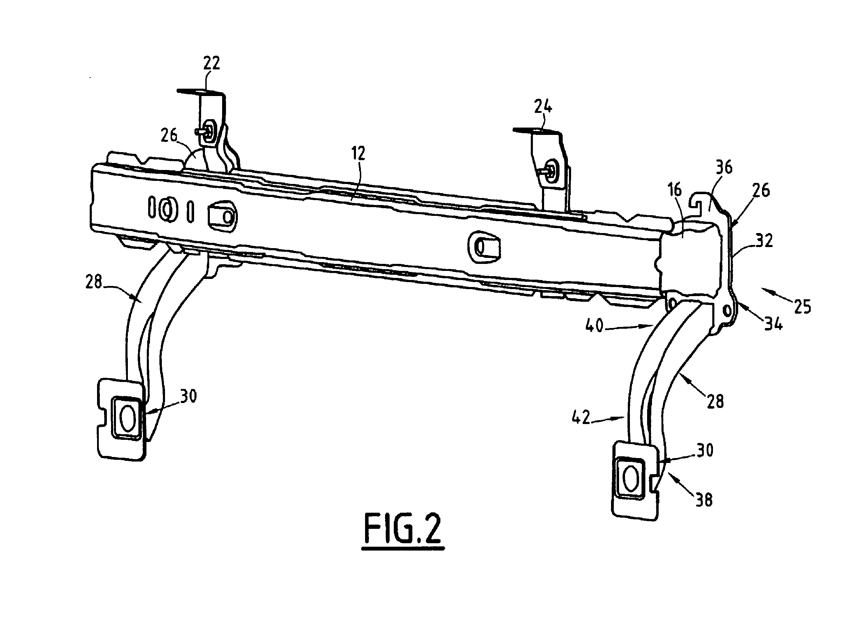

- la figure 2 est une vue de face en perspective d'une partie d'un pare-chocs d'un véhicule automobile selon l'invention ;
- la figure 3 est une vue du côté de la partie du pare-chocs illustrée sur la figure 2 ;
- la figure 4 est une vue en coupe de la pièce de liaison le long du plan IV-IV de la figure 3 ;
- la figure 5 est une vue en coupe de la pièce de liaison le long du plan V-V de la figure 3 ; et

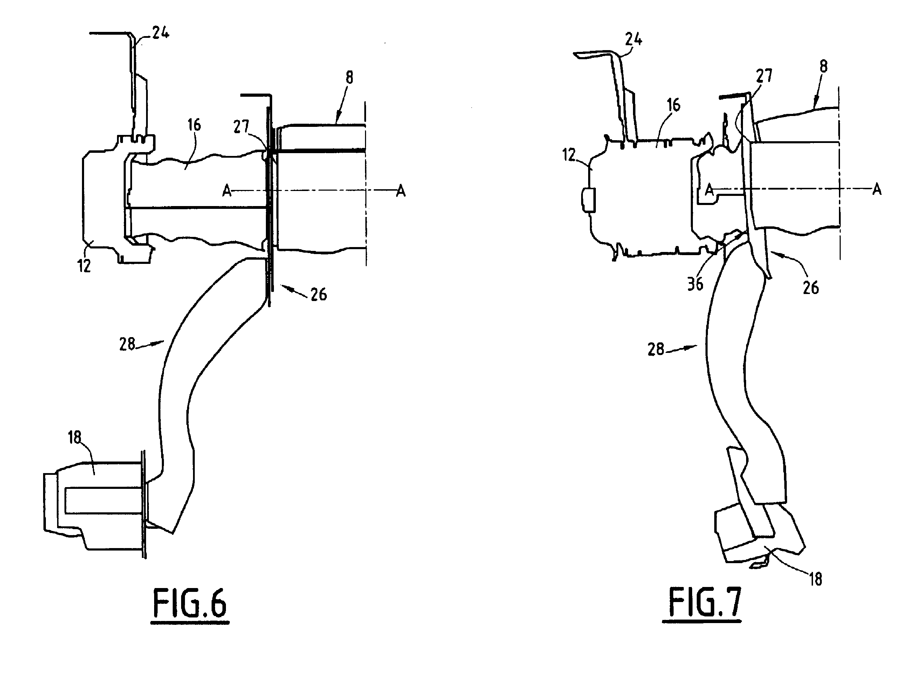

- les figures 6 et 7 sont des vues de côté du pare-chocs du véhicule automobile avant et respectivement après déformation.

Dans la suite de la description, les termes « avant », « arrière », « supérieur » et « inférieur » sont définis par rapport à l'orientation générale d'un véhicule automobile.

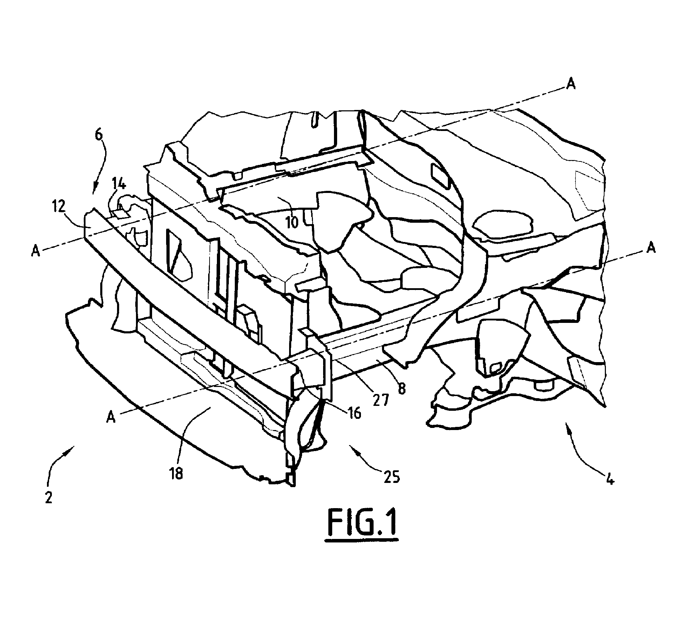

La partie avant de la structure d'un véhicule automobile 2 selon l'invention est illustrée sur la figure 1. Ce véhicule comporte un châssis 4 et un pare-chocs 6 fixé au châssis 4.

De façon classique, le châssis 4 est monté sur quatre roues. Il est propre à porter le moteur d'entraînement du véhicule ainsi que la carrosserie de celui-ci. Il comprend deux longerons 8, 10 et de traverses fixées aux longerons 8, 10.

Le pare-chocs 6 comprend une poutre supérieure 12, deux absorbeurs de chocs 14, 16 fixés sur la face arrière de la poutre supérieure 12, et une poutre inférieure 18 fixée aux longerons 8, 10.

La poutre supérieure 12 s'étend à environ 50 cm du sol et forme une saillie par rapport à la carrosserie du véhicule automobile 2. Elle est propre à venir au contact des obstacles ou des véhicules lors d'un choc frontal.

Deux pattes d'attache 22, 24 destinées à être accrochées à la carrosserie du véhicule sont en outre fixées dans une partie centrale de la poutre supérieure 12.

Les absorbeurs de chocs 14, 16 sont propres à absorber l'énergie mécanique par déformation lors d'un choc. Ils sont formés par un bloc en tôle ondulée. Ils s'étendent selon l'axe longitudinal A-A des longerons 8, 10.

La poutre inférieure 18 est destinée à venir au contact d'un tibia d'un piéton en cas de choc avec celui-ci. Elle s'étend parallèlement à la poutre supérieure 12. Elle est située à environ 30 cm du sol.

La poutre inférieure 18 est portée uniquement par les longerons 8, 10.

Deux ensembles de support 25 déformables sont propres à fixer chacun une extrémité de la poutre inférieure 18 à un longeron 8, 10.

Chaque ensemble de support 25 comprend une platine de réparabilité supérieure 26 solidaire de la face d'extrémité 27 d'un longeron 8, une bretelle de liaison 28 reliée à la platine supérieure 26, et une platine de réparabilité inférieure 30 fixée à la bretelle.

La platine supérieure 26 est formée d'une plaque d'acier. Elle présente une face principale arrière 32 boulonnée à la face d'extrémité 27 d'un longeron 8, et une face principale avant 36 sur laquelle s'applique un absorbeur de chocs 14, 16.

La platine supérieure 26 comprend une portion de fixation 34 qui s'étend en saillie sous le longeron, dans un plan perpendiculaire à l'axe longitudinal A-A du longeron.

La bretelle de liaison 28 est propre à porter la poutre inférieure 18 de façon à ce que cette dernière soit positionnée en avant de la poutre supérieure 12, de sorte que lors d'un choc, la poutre inférieure 18 soit en contact avec le tibia d'un piéton avant que la poutre supérieure 12 ne touche le genou de celui-ci.

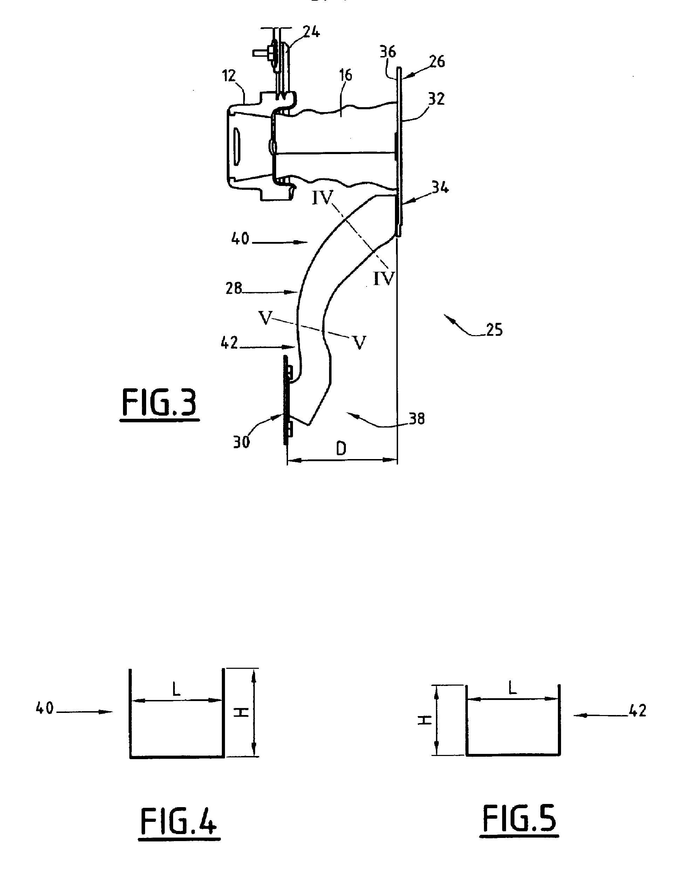

A cet effet (Fig. 3), la bretelle de liaison 28 s'étend vers l'avant du véhicule, selon l'axe longitudinal A-A des longerons 8, 10, sur une distance D comprise entre 90 et 130 mm. De préférence, la distance D est égale à 110 mm.

La bretelle de liaison 28 présente une forme générale arrondie bombée vers l'avant. Elle est légèrement recourbée dans l'autre sens à son extrémité inférieure 38.

La bretelle de liaison 28 présente une section en forme de U ayant une base de largeur L environ égale à 40 mm, et deux branches dont la hauteur H varie sensiblement continûment le long de la bretelle.

En particulier, la partie supérieure 40 de la bretelle 28, située après montage à côté de la plaque de réparabilité supérieure 26, présente une hauteur H supérieure à celle de la partie inférieure 42 de la bretelle, située à côté de la plaque de réparabilité inférieure 30.

Comme visible sur les figures 4 et 5, la hauteur H des branches de la section en forme de U de la partie supérieure 40 est comprise entre 30 et 40 mm. La hauteur des branches de la section en forme de U de la partie inférieure 42 est comprise entre 15 et 25 mm.

La section en U des bretelles de liaison 28 permet d'obtenir une tenue et un maintien rigide de la poutre inférieure 18 lors des chocs.

La bretelle de fixation 28 est fixée à la face avant 36 de la portion de fixation 34 de la platine supérieure par deux cordons de soudure.

La platine de réparabilité inférieure 30 présente une face principale arrière 44 soudée à l'extrémité inférieure de à la bretelle de liaison 28 par deux cordons de soudure, et une face principale avant 46 sur laquelle une extrémité de la poutre inférieure 18 est boulonnée.

Lors d'un choc piéton, la poutre inférieure 18 vient en premier au contact du piéton, la portion de fixation 34 de la platine supérieure 26 se déforme par flexion autour d'un axe transversal. La platine supérieure 26 fléchit et absorbe une partie de l'énergie du choc.

Les bretelles de liaison 28 pivotent autour de l'axe de déformation de la platine supérieure 26.

Lorsque la poutre supérieure 12 vient en contact du genou du piéton, l'énergie du choc comprime les absorbeurs de chocs 14, 16 tandis que les bretelles de liaison 28 continuent de pivoter et s'effacent en dessous des absorbeurs 14, 16.

Le système de protection décrit ci-dessus est léger et comporte peu de pièces, tout en assurant la fonction de protection du piéton. Il est plus facile à monter et économique.

## Revendications

1. Véhicule automobile (2), du type comportant un châssis (4) comprenant deux longerons (8, 10), et un pare-chocs (6) porté par le châssis (4), le pare-chocs (6) comportant une poutre supérieure (12) reliée à l'extrémité avant de chaque longeron (8, 10) par un absorbeur de chocs (14, 16), et une poutre inférieure (18) adaptée pour venir en contact avec un tibia d'un piéton,
chaque partie d'extrémité de la poutre inférieure (18) étant fixée à l'extrémité d'un ensemble de support (25) déformable, chaque ensemble de support (25) comprenant une pièce de liaison (28) reliée à la poutre inférieure (18), et une platine (26) fixée à la pièce de liaison (28) et solidaire de l'extrémité (27) d'un longeron (8, 10) associé de telle sorte que la platine (26) est disposée entre le longeron (8, 10) et l'absorbeur de chocs (14, 16).

2. Véhicule automobile (2) selon la revendication 1, **caractérisé en ce que** chaque pièce de liaison (28) est rigide tandis que chaque platine (26) comporte, en dessous du longeron (8, 10), une portion (34) de fixation de la pièce de liaison (28) adaptée pour fléchir vers l'arrière sous l'effet d'un choc.

3. Véhicule automobile (2) selon la revendication 2, **caractérisé en ce que** lors d'un choc, ladite portion de fixation (34) de la platine (26) est propre à fléchir autour d'un axe sensiblement perpendiculaire à l'axe longitudinal (A-A) des longerons (8, 10), et **en ce que** la pièce de liaison (28) est propre à pivoter autour de cet axe.

4. Véhicule automobile (2) selon l'une quelconque des revendications 1 à 3, **caractérisé en ce que** chaque pièce de liaison (28) présente une section en forme de U, et **en ce que** les branches du U adjacentes au longeron (8, 10) présentent une hauteur (H) supérieure aux branches du U adjacentes à la poutre inférieure (18).

5. Véhicule automobile (2) selon l'une quelconque des revendications 1à 4, **caractérisé en ce que** chaque pièce de liaison (28) présente une forme générale arquée bombée vers l'avant, ladite pièce de liaison (28) étant recourbée en sens inverse à son extrémité inférieure (38).

6. Véhicule automobile (2) selon l'une quelconque des revendications 1 à 5, **caractérisé en ce que** ladite portion de fixation (34) de la platine (26) s'étend dans un plan perpendiculaire à l'axe longitudinal (A-A) des longerons (8, 10).

7. Véhicule automobile (2) selon l'une quelconque des revendications 1 à 6, **caractérisé en ce que** la platine (26) est formée d'une plaque d'acier et comprend une face principale arrière (32) fixée à une face d'extrémité (27) du longeron (8, 10) et une face principale avant (36) sur laquelle s'applique l'absorbeur de choc (14, 16).

8. Véhicule automobile (2) selon l'une quelconque des revendications 2 à 7, **caractérisé en ce que** la pièce de liaison (28) est fixée à la portion (34) de fixation de la platine (26) par soudage.

## Claims

1. A motor vehicle (2), of the type that includes a chassis (4) that has two longitudinal members (8, 10), and a fender (6) mounted on the chassis (4), where the fender (6) includes a top rail (12) that is connected to the front end of each longitudinal member (8, 10) by a shock absorber (14, 16), and a bottom rail (18) that is placed so as to make contact with the tibia of a pedestrian,
each end part of the bottom rail (18) being attached to the end of a deformable support assembly (25), where each support assembly (25) has a connecting part (28) connected to the bottom rail (18), and a plate (26) attached to the connecting part (28) and fixed to the end (27) of an associated longitudinal member (8, 10) in such a manner that the plate (26) is positioned between the longitudinal member (8, 10) and the shock absorber (14, 16).

2. A motor vehicle (2) according to claim 1, **characterised in that** each connecting part (28) is rigid while, below the longitudinal member (8, 10), each plate (26) includes an attachment part (34) of the connecting part (28) that is designed so as to bend backwards under the effect of an impact.

3. A motor vehicle (2) according to claim 2, **characterised in that** when an impact occurs, the said attachment part (34) of the plate (26) is able to bend around an axis that is substantially perpendicular to the longitudinal axis (A-A) of the longitudinal members (8, 10), and **in that** the connecting part (28) is able to pivot around this axis.

4. A motor vehicle (2) according to any of claims 1 to 3, **characterised in that** each connecting part (28) has a U-shaped section, and **in that** the branches of the U adjacent to the longitudinal member (8, 10) have a height (H) that is greater than the branches of the U that are adjacent to the bottom rail (18).

5. A motor vehicle (2) according to any of claims 1 to 4, **characterised in that** each connecting part (28) has a generally bowed shape curved toward the front, with the said connecting part (28) being curved back in the opposite direction to its bottom end (38).

6. A motor vehicle (2) according to any of claims 1 to 5, **characterised in that** the said attachment part (34) of the plate (26) extends in a plane perpendicular to the longitudinal axis (A-A) of the longitudinal members (8, 10).

7. A motor vehicle (2) according to any of claims 1 to 6, **characterised in that** the plate (26) is formed from a steel plate and includes a principal rear face (32) attached to an end face (27) of the longitudinal member (8, 10) and a principal front face (36) on which the shock absorber (14, 16) is attached.

8. A motor vehicle (2) according to any of claims 2 to 7, **characterised in that** the connecting part (28) is attached to the attachment part (34) of the plate (26) by welding.

## Patentansprüche

1. Kraftfahrzeug (2) umfassend ein Fahrgestell (4) mit zwei Längsträgern (8, 10) und einer Stoßstange (6), die vom Fahrgestell (4) gehalten wird, wobei die Stoßstange (6) einen oberen Träger (12) umfasst, der über einen Stoßabsorber (14, 16) mit dem vorderen Ende eines jeden Längsträgers (8, 10) verbunden ist, und einen unteren Träger (18), der angepasst ist, um mit einem Schienbein eines Fußgängers in Kontakt zu treten,
wobei jeder Endabschnitt des unteren Trägers (18) am Ende einer verformbaren Trageeinheit (25) befestigt ist, und jede Trageeinheit (25) ein Verbindungsstück (28) umfasst, das mit dem unteren Träger (18) verbunden ist, sowie eine Platte (26), die auf dem Verbindungsstück (28) befestigt, und kraftschlüssig mit dem Ende (27) eines Längsträgers (8, 10) verbunden ist, der so zugeordnet ist, dass die Platte (26) zwischen dem Längsträger (8, 10) und dem Stoßabsorber (14, 16) angeordnet ist.

2. Kraftfahrzeug (2) nach Anspruch 1, **dadurch gekennzeichnet, dass** jedes der Verbindungsstücke (28) steif ist, während jede Platte (26) unterhalb des Längsträgers (8, 10) einen Abschnitt (34) zur Befestigung des Verbindungsstückes (28) umfasst, die angepasst ist, um unter Einwirkung eines Stoßes nach hinten nachzugeben.

3. Kraftfahrzeug (2) nach Anspruch 2, **dadurch gekennzeichnet, dass** der besagte Befestigungsabschnitt (34) der Platte (26) bei einem Stoß geeignet ist, um eine in Achse nachzugeben, die in etwa senkrecht zur Längsachse (A-A) der Längsträger (8, 10) steht, und dadurch, dass das Verbindungsstück (28) geeignet ist, um diese Achse nachzugeben.

4. Kraftfahrzeug (2) nach irgendeinem der Ansprüche 1 bis 3, **dadurch gekennzeichnet, dass** jedes der Verbindungsstücke (28) einen Querschnitt in Form eines U aufweist, und dadurch, dass die an den Längsträger (8, 10) angrenzenden Äste des U eine Höhe (H) aufweisen, die größer ist, als jene der Äste des U, die an den unteren Träger (18) angrenzen.

5. Kraftfahrzeug (2) nach irgendeinem der Ansprüche 1 bis 4, **dadurch gekennzeichnet, dass** jedes der Verbindungsstücke (28) eine allgemein gebogene und nach vorne gewölbte Form aufweist, wobei das besagte Verbindungsstück (28) an seinem unteren Ende (38) in die entgegengesetzte Richtung gebogen ist.

6. Kraftfahrzeug (2) nach irgendeinem der Ansprüche 1 bis 5, **dadurch gekennzeichnet, dass** sich der besagte Befestigungsabschnitt (34) der Platte (26) über eine Ebene erstreckt, die normal zur Längsachse (A-A) der Längsträger (8, 10) steht.

7. Kraftfahrzeug (2) nach irgendeinem der Ansprüche 1 bis 6, **dadurch gekennzeichnet, dass** die Platte (26) aus Stahl gefertigt ist, und eine rückwärtige Hauptseite (32) umfasst, die an einem Ende (27) eines Längsträgers (8, 10) befestigt ist, und eine vordere Hauptseite (36), auf der der Stoßabsorber (14, 16) anliegt.

8. Kraftfahrzeug (2) nach irgendeinem der Ansprüche 2 bis 7, **dadurch gekennzeichnet, dass** das Verbindungsstück (28) durch Verschweißen am Befestigungsabschnitt (34) der Platte (26) befestigt ist.
